# EUROPÄISCHE PATENTANMELDUNG

(11) **EP 1 168 853 A2**
(43) Veröffentlichungstag der Anmeldung: **02.01.2002**
(21) Anmeldenummer: 01110269.6
(22) Anmeldetag: 25.04.2001
(51) Int. Cl.: H04N 17/00

(54) **Verfahren zur externen Funktionskontrolle und Instandsetzung von TV-, Video- und/oder HiFi-Geräten sowie Anordnung zur Durchführung des Verfahrens**

(30) Priorität: 25.04.2000 DE 10020203
(71) Anmelder: Fischer, Wolfgang, 07973 Greiz (DE)
(72) Erfinder: Fischer, Wolfgang, 07973 Greiz (DE); Neupert, Thomas, 08468 Heinsdorfergrund (DE)
(74) Vertreter: Auerbach, Bettina Patentanwältin

(57) **Zusammenfassung**

2.1.
   Die Lösung dient der Ferndiagnose, Ferneinrichtung- bzw. Installationseinrichtung und zur Ferninstandsetzung von rechnergesteuerten TV-, Video und/oder HiFi-Geräten.
2.2.
   Erfindungsgemäß wird zur externen Funktionskontrolle und Instandsetzung von rechnergesteuerten TV-, Video und/oder HiFi-Geräten, die wenigstens einen Prozesssor, einen Speicherbaustein und ein Bussystem enthalten, ein spezielles Servicemodul an einer Schnittstelle mit dem Bussystem des jeweiligen TV-Gerätes gekoppelt. Das Servicemodul wird aktiviert, worauf mittels Datenfernübertragung und bei Einsatz von Diagnosesoftware die Funktionskontrolle des jeweiligen TV-Gerätes vorgenommen wird. Die Ergebnisse werden mittels Datenfernübertragung an einen zentralen Servicerechner übermittelt, wo die Auswertung vorgenommen wird. Die errechneten Korrekturmaßnahmen werden mittels Datenfernübertragung zum Servicemodul übertragen, worauf die veranlaßten erforderlichen Korrekturmaßnahmen realisiert werden.
2.3.
   Die Anwendung erfolgt im Dienstleistungsbereich bei der Instandhaltung von rechnergesteuerten TV-, Video und/oder HiFi-Geräten.

## Beschreibung

Die Erfindung betrifft ein Verfahren zur externen Funktionskontrolle und Instandsetzung von TV-, Video und/oder HiFi-Geräten, die wenigstens mit einem Prozessor, einem Speicherbaustein und einem Bussystem ausgestattet sind, und eine Anordnung zur Durchführung des Verfahrens, wie es im Dienstleistungsbereich bei der Instandhaltung von rechnergesteuerten TV-, Video und/oder HiFi-Geräten benötigt wird.

Lösungen für die externe Funktionsüberwachung, Funktionskontrolle und -Funktionsinstallation sowie deren Instandsetzung für TV-, Video- und/oder HiFi-Geräte sind aus der Praxis und auch aus der Patentliteratur nicht bekannt.
Zur Zeit wird es so gehandhabt, daß das defekte Gerät, bei Feststellen des Mangels vom Benutzer bei einem Dienstleister als Reparaturleistung angemeldet wird, dieser einen Termin vergibt für die Bereitstellung eines Monteurs vor Ort und der Monteur dann das Gerät vor Ort untersucht, den Fehler feststellt und wenn möglich gleich repariert. Sollte die Reparatur nicht gleich oder vor Ort möglich sein, dann muß das Gerät mit in die Werkstatt genommen werden. Oft ist es auch notwendig, daß nach der ersten Diagnose ein zweiter Termin vereinbart werden muß, da bestimmte Teile nicht sofort für deren Austausch zur Verfügung stehen und beim Hersteller bestellt werden müssen. Diese Prozedur ist mit viel Aufwand und Zeit und damit mit Kostenfaktoren verbunden.
Zwar sind in den Werkstätten rechnergesteuerte Überwachungssysteme vorhanden, um Fehleranalysen oder Funktionskontrollen durchführen zu können, doch das rechnergesteuerte Wartungssystem und das jeweilige rechnergesteuerte TV-, Video und/oder HiFi-Gerät müssen erst physisch zusammengeführt werden.

Erst dann kann die rechnergestützte Diagnose und gegebenenfalls der zielgerichtete Eingriff in Hard- und Softwarekomponenten des TV-, Video und/oder HiFi-Gerätes vorgenommen werden.
Dieses Vorgehen ist zeit- und kostenaufwendig, weil sich erst im Ergebnis der Diagnose erweist, welche Ersatzkomponenten beispielsweise beschafft und ausgetauscht werden müssen oder ob es sich im Instandsetzungsfall lediglich um die notwendige Korrektur eines Softwarebausteins handelt.

Die Aufgabe der Erfindung besteht deshalb in der Überwindung der Mängel des bekannten Standes der Technik. Die zu schaffende neue technische Lösung soll zur kostengünstigen Ferndiagnose, Ferneinrichtung- bzw. Installationseinrichtung und zur Ferninstandsetzung von rechnergesteuerten TV-, Video und/oder HiFi-Geräten geeignet sein.

Die Aufgabe wird durch die kennzeichnenden Merkmale der Ansprüche 1 und 7 gelöst, wobei die zweckmäßigen Ausführungsformen und Ausgestaltungen durch die Unteransprüche beschrieben sind.
Danach wird gemäß des erfindungsgemäßen Verfahrens zur externen Funktionskontrolle und Instandsetzung von rechnergesteuerten TV-, Video und/oder HiFi-Geräten, die wenigstens einen Prozesssor, einen Speicherbaustein und ein Bussystem enthalten, in einem ersten Arbeitsschritt ein spezielles Servicemodul an einer Schnittstelle mit dem Bussystem des jeweiligen TV-, Video und/oder HiFi-Gerätes gekoppelt. Anschließend wird das Servicemodul aktiviert, worauf mittels Datenfernübertragung und bei Einsatz von Diagnosesoftware die Funktionskontrolle ausgewählter Hard- und Softwarekomponenten des jeweiligen TV-, Video und/oder HiFi-Gerätes vorgenommen wird. Die gewonnenen Ergebnisse dieser Funktionskontrolle werden mittels Datenfernübertragung an einen zentralen Servicerechner übermittelt.

Im zentralen Servicerechner wird die Auswertung der Ergebnisse der Funktionskontrolle vorgenommen. Daraufhin werden die errechneten Korrekturmaßnahmen mittels Datenfernübertragung zum Servicemodul übertragen, worauf die veranlaßten erforderlichen Korrekturmaßnahmen für die Sicherung der erwünschten Hard- und Softwarefunktionen im jeweiligen TV-, Video und/oder HiFi-Gerät mit Hilfe des geräteinternen Rechnerbausteins realisiert werden.

Die vorgeschlagene Verfahrensweise ist mit dem überaus wichtigen Vorteil verbunden, daß zum Zwecke der Diagnose und der Instandsetzung von TV-, Video und/oder HiFi-Geräten das physische Zusammenführen von TV-, Video und/oder HiFi-Gerät und Instandsetzungskapazität an einem Ort nur noch im Ausnahmefall gewährleistet werden muß. Das instandzusetzende TV-, Video und/oder HiFi-Gerät muß nur noch dann in die entsprechend ausgerüstete Werkstatt, oder der mit dem Servicerechner und den benötigten Ersatzteilen ausgestattete Servicemonteur muß nur noch dann zum Kunden kommen, wenn sich im Ergebnis der Ferndiagnose und der Versuche der Fernkorrektur von funktionsgesteuerten Soft- und Hardwarekomponenten ein derartiges Erfordernis bestätigt. Dies führt zu beträchtlichen Leistungsteigerungen beim jeweiligen Dienstleister einerseits sowie zu Kostenminderung für das Inanspruchnehmen von Instandsetzungsdienstleistungen. Hinzu kommen Minderungen der Transportanforderungen für die Geräte, Instandsetzungstechniker und Ersatzteile, was mit entsprechend verminderten Umweltbelastungen einhergeht.
Ebenso vorteilhaft kann die oft für den Verbaucher komplizierte Selbstinstallation von derartigen Geräten vorgenommen werden.
Die vorgeschlagene Verfahrensweise ist auch vorteilhaft nutzbar für die prophylaktische Überwachung der ordnungsgemäßen Gerätefunktionen während der vereinbarten Gewährleistungszeiträume, wodurch sich für den Hersteller oder Lieferer des jeweiligen TV-, Video und/oder HiFi-Gerätes beachtliche Aufwandsminderungen ergeben können.

Diese resultieren daraus, daß mittels vorbeugender Instandhaltung akute Instandsetzungsanforderungen verhindert werden können, indem dem Betreiber des TV-, Video und/oder HiFi-Gerätes keine ansich unzumutbaren Aktivitäten im Zusammenhang mit der Realisierung von prophylaktischen Funktionsüberwachungen zugemutet werden müssen. Nach dem vorgeschlagenen Verfahren können für die Datenfernübertragung vorteilhafterweise die verfügbaren Signalübertragungssysteme, wie stationäre Telefonleitungen, Funktelefonnetze, TV-Breitbandkabelnetze oder Elektroenergieverteilungsnetze, genutzt werden. Derartige Systeme sind inzwischen nahezu in jedem Haushalt verfügbar und erfordern somit keinen technischen Realisierungsaufwand.

Es ist möglich, die Kopplung des speziellen Servicemoduls mit einer Busschnittstelle am jeweiligen TV-, Video und/oder HiFi-Gerät bereits bei der Herstellung oder individuell bei entsprechendem Bedarf vorzunehmen. Dieser Bedarf kann beispielsweise bei der Übertragung der pauschalen Funktionsüberwachung an einen Dienstleister oder im Falle von erkannten Funktionsstörungen am jeweiligen TV-, Video und/oder HiFi-Gerät, wenn dem Spezialisten unter Vermeidung von Anreiseaufwand und dem Transport von Diagnosetechnik die Möglichkeit der Ferndiagnose und des Ferneingriffs gegeben werden soll, eintreten. Das individuell mit dem Bussystem zu koppelnde Servicemodul kann beispielsweise auch vom Wartungs- und Instandhaltungsunternehmen leihweise bereitgestellt werden.

Die Aktivierung des mit dem Bussystem gekoppelten Servicemoduls läßt sich mittels Fernwirktechnik und manuell vornehmen. Es besteht die Möglichkeit, den jeweiligen Aktivierungszustand am betroffenen TV-, Video und/oder HiFi-Gerät anzuzeigen und/oder in einem speziellen auslesbaren Speicherbaustein zu dokumentieren.
Auf diese Weise kann sichergestellt werden, daß bedarfsweise die Zeiten, in denen der Informationsverbund des jeweiligen TV-, Video und/oder HiFi-Gerätes mit einem zentralen Servicerechner bestand, nachgewiesen werden können.

Dies dient der Mißbrauchsvorbeugung und gegebenenfalls der Abrechnungskontrolle.
Ebenso ist es möglich, die mittels Fernwirktechnik vorgenommenen Korrekturmaßnahmen an Hard- und/oder Softwarekomponenten des jeweiligen TV-, Video und/oder HiFi-Gerätes in einem speziellen Speicherbaustein des Servicemoduls abruf- oder auslesbar zu speichern und damit zu dokumentieren.

Die Vorteile des vorgeschlagenen Verfahrens bestehen zusammengefaßt in der Möglichkeit, die inzwischen allgemein verfügbaren Informationsübertragungswege zur Erhöhung der wirtschaftlichen Effizienz, zur Verkürzung von Reaktionszeiten und zur Erhöhung der Qualität von Wartungs- und Instandhaltungsmaßnahmen zu nutzen. Dazu wird mit Hilfe des Einsatzes spezieller Servicmodule, die bedarfsweise mit einer Schnittstelle des Bussystems im jeweiligen TV-, Video und/oder HiFi-Gerät gekoppelt werden, im Aktivierungszustand eine Wirkverbindung zum leistungsfähigen Servicerechner beim Überwachungs-, Wartungs- und/oder Instandhaltungsunternehmen hergestellt. Auf diese Weise ist mit vergleichsweise geringem materiellem Aufwand eine umfassende Ferndiagnose des Zustandes und der gleichzeitigen teilweisen Ferneinwirkung auf die Funktion des untersuchten TV-, Video und/oder HiFi-Gerätes bzw. seiner enthaltenen Hard- und Softwarekomponenten möglich.
Im Ergebnis der Ferndiagnose können erforderliche Korrekturmaßnahmen an ausgewählten Hard- und Softwarekomponenten mittels Fernwirktechnik vorgenommen werden, so daß sich der aufwendige Transport des TV-, Video- und/oder HiFi-Gerätes oder des Monteurs zum Zwecke der Instandsetzung durch manuellen Eingriff entscheidend vermindern läßt.
Während sich die Leistungsfähigkeit des Instandhaltungsunternehmens bei Anwendung des vorgeschlagenen Verfahrens erheblich steigern läßt, vermindern sich gleichermaßen die spezifischen Aufwendungen für den Inanspruchnehmer der Dienstleistung des Instandhaltungsunternehmens. Bei Nutzung des Verfahrens für Zwecke der vorbeugenden Instandhaltung, beispielsweise durch vereinbarte regelmäßige Funktionchecks, läßt sich die Lebensdauer und die Funktionssicherheit der entsprechend ausgestatteten TV-, Video und/oder HiFi-Geräte erheblich erhöhen.
Damit ist ein Verfahren für die interoperative Kontrolle und Überwachung der betreffenden TV-, Video und/oder HiFi-Geräte gegeben.

Die vorgeschlagene Anordnung zur Durchführung des Verfahrens besteht aus einem Elektronikbaustein mit Hard- und Softwarekomponenten, der als Servicemodul zwischen dem Bussystem des rechnergesteuerten TV-, Video und/oder HiFi-Gerätes und einem im Aufstellungsbereich verfügbaren Signalübertragungssystem eingefügt ist. Dabei verfügt das Servicemodul wenigstens über einen Sender und wenigstens einen Empfänger, die jeweils für die Datenfernübertragung ausgestattet sind. Außerdem enthält das Servicemodul eine Koppelstelle, mit deren Hilfe das Servicemodul mit einer geeigneten Busschnittstelle an wenigstens einem TV-, Video und/oder HiFi-Gerät angekoppelt werden kann. Weiterhin ist das Servicemodul so ausgestattet, daß es wenigstens mit einem im Aufstellungsbereich verfügbaren Signalübertragungssystem gekoppelt werden kann. Schließlich enthält die Anordnung auch einen Aktivierungsbaustein, mit dessen Hilfe das Servicemodul bei Erfordernis aktiviert und deaktiviert werden kann.

Es ist vorgesehen, als Signalübertragungssystem, mit dem das Servicemodul bedarfsweise in ansich bekannter Weise gekoppelt werden kann, das stationäre Telefonnetz, ein geeignetes Funktelefonnetz, des TV-Breitbandkabelnetz oder das Elektroenergieverteilungsnetz zu nutzen. Das Servicemodul kann auch eine mobile Einrichtung sein, mit deren Hilfe bei Bedarf wechselnd eine Verbindung zwischen einem gewählten Signalübertragungssystem und einem rechnergesteuerten TV-, Video und/oder HiFi-Gerät hergestellt wird. Derartige mobile Einrichtungen können sowohl als zum Haushalt gehörendes Gerät oder als Leiheinrichtung des Serviceuntenehmens angewendet werden. Komfortabler ist dagegen die Anordnung des Servicemoduls als ein werkseitig vorgesehener oder werkstattseitig nachgerüsteter stationär mit dem TV-, Video und/oder HiFi-Gerät verbundener Elektronikbaustein.

Es gehört zum Wesen der Erfindung, daß das vorgeschlagene Servicemodul manuell und/oder mittels Fernwirktechnik aktivierbar und deaktivierbar ist.
Das Servicemodul ist in einer anderen Ausführungsform als multivalentes Funktionselement auch mit unterschiedlichen TV-, Video und/oder HiFi-Geräten koppelbar. Das Servicemodul kann hard- oder softewareseitig mit einer Einrichtung für die Zugangsbeschränkung auf ausgewählte Dienstleister ausgestattet sein.
Damit kann sichergestellt werden, daß bei Bedarf lediglich das im Auftrag des Herstellers tätige Seviceunternehmen zur Durchführung von Ferndiagnose- und Femwirkmaßnahmen berechtigt wird.
Für die Dokumentierung der Einsatzzeit kann das Servicemodul mit einem die Einsatzzeit dokumentierenden auslesbaren Speicherbaustein ausgestattet sein.
Ebenso ist es möglich, das Servicemodul mit einem die realisierten Fernwirkmaßnahmen dokumentierenden auslesbaren Speicherbaustein auszustatten.

Die Vorteile der vorgeschlagenen Anordnung zur Durchführung des Verfahrens der externen Funktionskontrolle, Einrichtung der Installation und Instandsetzung von rechnergesteuerten TV-, Video und/oder HiFi-Geräten bestehen zusammengefaßt in der nun gegebenen Möglichkeit, mittels leistungsfähiger Servicerechner beim Dienstleister eine qualifizierte interoperative rechnergstützte Ferndiagnose an rechnergesteuerten TV-, Video und/oder HiFi-Geräten vornehmen zu können. Bei entsprechend großen Stückzahlen werden die Kosten für das benötigte Servicemodul, das im Aufstellungsbereich bedarfsweise die nachträgliche Kopplung zwischen vorhandenen Signalübertragungssystemen und dem jeweiligen TV-, Video und/oder HiFi-Gerät sichern kann, kaum größer sein, als die Kosten für einen einmaligen, gegebenenfalls nur der Fehleraufnahme dienenden Monteurbesuch im Aufstellungsbereich.
Die vorgeschlagene Anordnung bietet darüber hinaus den Vorteil, daß seitens des Dienstleistungsunternehmens mobile Servicemodule dem Kunden bedarfsweise leihweise zur Verfügung gestellt werden können.

Bei entsprechend komfortabler Ausgestaltung des Servicemoduls läßt sich dieses gegebenenfalls sehr variabel für die Herstellung der angestrebten Kopplung von beliebigen rechnergestützten TV-, Video und/oder HiFi-Geräten und beliebigen im jeweiligen Aufstellungsbereich verfügbaren Signalübertragungssystemen nutzen. Eine denkbare Breitenanwendung der entwickelten Anordnung besteht in einem Ausrüst- bzw. Nachrüstsatz für rechnergesteuerte TV-, Video und/oder HiFi-Geräte, mit dem bedarfsweise die Online- Verbindung zum Servicrechner des Lieferers oder eines entsprechenden Dienstleisters für das jeweilige TV-, Video und/oder HiFi-Gerät hergestellt werden kann.

Die Erfindung soll nachstehend mit Ausführungsbeispielen näher erläutert werden. In der beigefügten Zeichnung zeigen
- Fig. 1:: die schematische Dartsellung der Anordnung als zwischen dem TV-, Video und/oder HiFi-Gerät und dem Signalübertraungssystem positionierten Elektronikbaustein;
- Fig. 2:: die schematische Darstellung der Hauptbestandteile des Elektronikbausteins.

### Ausführungsbeispiele

### Ausführungsbeispiel 1:

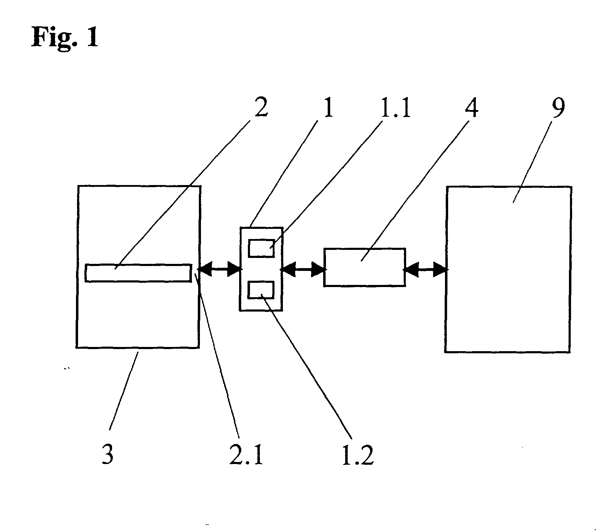

Gemäß der Figur 1 wird ein spezielles Servicemodul für Zwecke der externen Funktionskontrolle und der Instandsetzung von verschiedenen rechnergesteuerten TV-, Video und/oder HiFi-Geräten 1 als mobiler Elektronikbaustein 1 zum Einsatz gebracht.
Nach telefonischer Abstimmung mit der gewählten Fachwerkstatt wird dieser Elektronikbaustein 1 mit dem Bussystem 2 eines modernen TV-, Video- und/oder HiFi-Gerätes gekoppelt.

Eine weitere Kopplung wird zwischen dem Elektronikbaustein 1 und dem Telefonnetz als gewähltes Signalüber-tragungssystem 4 hergestellt. Daraufhin wird der Elektronikbaustein 1 vom Kunden aktiviert. Durch die hergestellte Verbindung von TV-Gerät 3 und zentralem Servicerechner 9 kann nun durch Abarbeiten von speziellen Analyseprogrammen vom zentralen Servicerechner 9 die Ferndiagnose wichtiger Hard- und Softwarekomponenten des TV-, Video und/oder HiFi-Gerätes 3 vorgenommen werden.
Sofern die vorgenommene Kopplung von TV-, Video- und/oder HiFi-Gerät 3 und zentralem Servicerechner 9 nicht einer prophylaktischen Überprüfung dient, wird im Störungsfall eine Eingrenzung der Störungsursache vorgenommen. Erkennt der zentrale Servicerechner 9 beispielsweise einen Fehler an einer Hard- oder Softwarekomponente des TV-, Video und/oder HiFi-Gerätes, wird geprüft, ob durch Einlesen spezieller Software oder durch Fernkorrektur von Hardwarefunktionen die Störungsursache überwunden werden kann.
Alternativ dazu kann im Ergebnis der rechnergestützten Ferndiagnose ein ausgefallenes Bauteil identifiziert und durch einen zielgerichteten Monteureinsatz kostengünstig vor Ort ausgetauscht werden.
Im Falle der Verfügbarkeit weiterentwickelter Softwarekomponenten können diese bedarfsweise auf gleichem Wege im jeweiligen TV-, Video und/oder HiFi-Gerät 3 ausgetauscht werden.
Auf Wunsch können verschleiß- oder alterungsbedingte Änderungen von bestimmten Standardeinstellungen mittels Datenfernübertragung unter Einsatz der vorgeschlagenen Anordnung durch die Servicewerkstatt korrigiert werden.

### Ausführungsbeispiel 2:

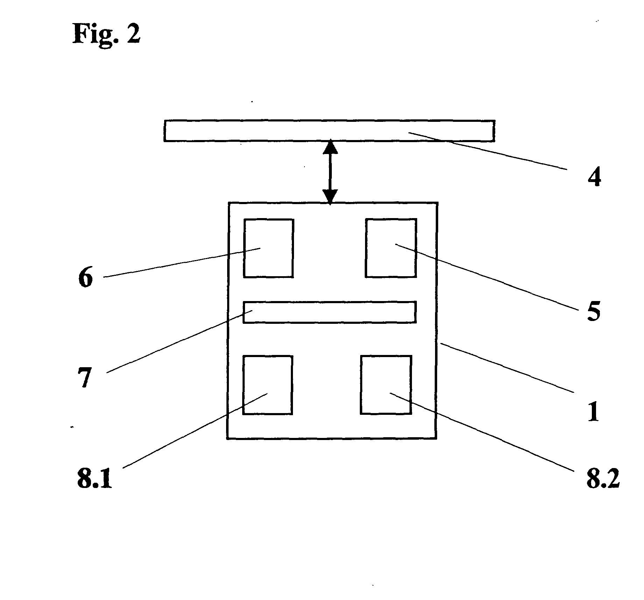

Gemäß der Figuren 1 und 2 ist ein rechnergesteuertes TV-, Video und/oder HiFi-Gerät 3 mit einem Elektronikbaustein 1 ausgestattet, wobei der Elektronikbaustein 1 sowohl Hardwarekomponenten 1.1 als auch Softwarekomponenten 1.2 enthält.

Der Elektronikbaustein ist mit einer Busschnittstelle 2.1 mit dem Bussystem 2 des TV-, Video und/oder HiFi-Gerätes 3 verbunden. Der Elektronikbaustein 1 dient im konkreten Fall als das spezielle Servicemodul, mit dessen Hilfe bedarfweise eine Online- Verbindung zum zentralen Servicerechner 9 des gewählten Wartungsdienstleisters hergestellt werden kann. Dazu nutzt das Servicemodul als Signalübertragungssystem 4 das TV-Breitbandkabelnetz.
Der Elektronikbaustein 1 verfügt zu seiner Funktion neben aktivierbaren Softwarekomponenten insbesondere über einen Sender 5, einen Empfänger 6 und einen Aktivierungsbaustein 7. Er enthält weiterhin einen Speicherbaustein 8.1 zur Dokumentation der Einsatzzeit, zur Sicherung der Nachvollziehbarkeit einer bestandenen Online-Verbindung zwischen dem TV-, Video und/oder HiFi-Gerät 3 und dem zentralem Servicerechner 9. Außerdem enthält der Elektronikbaustein 1 als Hardwarekomponente 1.1 einen Speicherbaustein 8.2 zur Dokumentation der vom zentralen Servicerechner 9 vorgenommenen Fernwirkmaßnahmen.
Darüberhinaus kann das Servicemodul mit Einrichtungen ausgestattet sein, mit deren Hilfe die Speicherbausteine 8.1, 8.2 ausgelesen und bedarfsweise dargestellt werden können.

### Bezugszeichenliste

- 1: Elektronikbaustein
- 1.1: Hardwarekomponente des Elektronikbausteins
- 1.2: Softwarekomponente des Elektronikbausteins
- 2: Bussystem des TV-, Video- und/oder HiFi-Gerätes
- 2.1: Busschnittstelle am Bussystem
- 3: TV-, Video- und/oder HiFi-Gerät
- 4: Signalübertragungssystem
- 5: Sender
- 6: Empfänger
- 7: Aktivierungsbaustein
- 8.1: Speicherbaustein zur Dokumentation der Einsatzzeit
- 8.2: Speicherbaustein zur Dokumentation der Fernwirkmaßnahmen
- 9: zentraler Servicerechner

## Patentansprüche

1. Verfahren zur externen Funktionskontrolle und Instandsetzung von TV-, Video und/oder HiFi-Geräten, die wenigstens mit einem Prozessor, einem Speicherbaustein und einem Bussystem ausgestattet sind, **dadurch gekennzeichnet,**
**daß** ein spezielles Servicemodul mit einer Busschnittstelle am jeweiligen TV-, Video und/oder HiFi-Gerät gekoppelt wird,
**daß** anschließend das Servicemodul aktiviert wird,
**daß** mittels Datenfernübertragung und dem Einsatz von spezieller Diagnosesoftware die Funktionskontrolle ausgewählter Hard- und Softwarekomponenten des jeweiligen TV-, Video und/oder HiFi-Gerätes vorgenommen wird,
**daß** die Ergebnise der Funktionskontrolle mittels Datenfernübertragung an einen zentralen Servicerechner übertragen werden,
**daß** die Auswertung der Ergebnisse der Funktionskontrolle im zentralen Servicerechner vorgenommen wird,
**daß** erforderliche Korrekturmaßnahmen mittels Datenfernübertragung zum Servicemodul vorgenommen werden und
**daß** die veranlaßten Korrekturmaßnahmen für die Sicherung der erwünschten Hard- und Softwarefunktionen im jeweiligen TV- und / oder Videogerät mit Hilfe des geräteinternen Rechnerbausteins realisiert werden.

2. Verfahren nach dem Anspruch 1, **dadurch gekennzeichent, daß** für die Datenfernübertragung verfügbare Signalübertragungssysteme, wie stationäre Telefonleitungen, Funktelefonnetze, TV-Breitbandkabelnetze oder Elektroenergieverteilungsnetze, genutzt werden.

3. Verfahren nach einem der Ansprüche 1 und 2, **dadurch gekennzeichnet, daß** die Koppelung des speziellen Servicemoduls mit der Busschnittstelle am jeweiligen TV-,Video- und/oder HiFi-Gerät herstellerseitig oder individuell vorgenommen wird.

4. Verfahren nach einem der Ansprüche 1 bis 3, **dadurch gekennzeichnet, daß** die Aktivierung des Servicemoduls mittels Fernwirktechnik oder manuell vorgenommen wird.

5. Verfahren nach einem der Ansprüche 1 bis 4, **dadurch gekennzeichnet, daß** der Aktivierungszustand am jeweiligen TV-, Video- und/oder HiFi-Gerät angezeigt und/oder in einem speziellen Speicherbaustein dokumentiert wird.

6. Verfahren nach einem der Ansprüche 1 bis 5, **dadurch gekennzeichnet, daß** die realisierten Korrekturmaßnahmen in einem speziellen Speicherbaustein des Servicemoduls abrufbar dokumentiert werden.

7. Anordnung zur Durchführung des Verfahrens nach den Ansprüchen 1 bis 6, **dadurch gekennzeichnet,**
**daß** die Anordnung ein als Elektronikbaustein (1) mit Hard- und Softwarekomponenten (1.1, 1.2) ausgestattetes Servicemodul enthält, das zwischen dem Bussystem (2) des rechnergesteuerten TV-und/oder Videogerätes (3) und einem im Aufstellungsbereich verfügbaren Signalübertragungssystem (4) angeordnet ist,
**daß** die Anordnung wenigstens mit einem Sender (5) und einem Empfänger (6) für die Datenfernübertragung ausgestattet ist,
**daß** die Anordnung mit einer geeigneten Busschnittstelle (2.1) an wenigstens einem TV- und/oder Videogerät (3) koppelbar ist,
**daß** die Anordnung mit wenigstens einem im Aufstellungsbereich verfügbaren Signalübertragungssystem (4) koppelbar ist und
**daß** die Anordnung mit einem Aktivierungsbaustein (7) ausgestattet ist.

8. Anordnung nach dem Anspruch 7, **dadurch gekenzeichnet, daß** das Signalübertragungssystem (4) das stationäre Telefonnetz, ein Funktelefonnetz, das TV-Breitbandkabelnetz oder das Elektroenergieverteilungsnetz ist.

9. Anordnung nach einem der Ansprüche 7 und 8, **dadurch gekennzeichnet, daß** die Anordnung eine mobile Einrichtung ist.

10. Anordnung nach einem der Ansprüche 7 und 8, **dadurch gekennzeichnet, daß** die Anordnung ein stationär mit dem TV- und/oder Videogerät (3) verbundener Elektronikbaustein (1) ist.

11. Anordnung nach einem der Ansprüche 7 bis 10, **dadurch gekennzeichnet, daß** die Anordnung manuell und/oder mittels Fernwirktechnik aktivierbar und deaktivierbar ist.

12. Anordnung nach einem der Ansprüche 7 bis 11, **dadurch gekennzeichnet, daß** die Anordnung als multivalentes Funktionselement mit verschiedenen TV-, Video- und/oder HiFi-Geräten (3) koppelbar ist.

13. Anordnung nach einem der Ansprüche 7 bis 12, **dadurch gekennzeichnet, daß** die Anordnung mit einer Einrichtung für die Zugangsbeschränkung auf ausgewählte Dienstleister ausgestattet ist.

14. Anordnung nach einem der Ansprüche 7 bis 13, **dadurch gekennzeichnet, daß** die Anordnung mit einem die Einsatzzeit dokumentierenden Speicherbaustein (8.1) ausgestattet ist.

15. Anordnung nach einem der Ansprüche 7 bis 14, **dadurch gekennzeichnet, daß** die Anordnung mit einem die realisierten Fernwirkmaßnahmen dokumentierenden Speicherbaustein (8.2) ausgestattet ist.
